# EUROPÄISCHE PATENTANMELDUNG

(11) **EP 2 402 679 A2**
(43) Veröffentlichungstag der Anmeldung: **04.01.2012**
(21) Anmeldenummer: 11005287.5
(22) Anmeldetag: 29.06.2011
(51) Int. Cl.: F24J 2/52

(54) **Montagevorrichtung zur Anordnung von Solarmodulen**

(30) Priorität: 02.07.2010 DE 102010017705
(71) Anmelder: Zurmühlen, Frank, 71665 Vaihingen/Enz (DE); Diwald, Patrik, 71665 Vaihingen/Enz (DE)
(72) Erfinder: Zurmühlen, Frank, 71665 Vaihingen/Enz (DE); Diwald, Patrik, 71665 Vaihingen/Enz (DE)
(74) Vertreter: Jeck, Anton

(57) **Zusammenfassung**

Es wird eine Montagevorrichtung (01) zur Anordnung von Solarmodulen (02) auf einer Fläche (03) beschrieben. Die Montagevorrichtung (01) besteht aus mehreren parallel zueinander verlaufend angeordneten geraden Schienen (04) sowie an den Schienen (04) befestigten, die Solarmodule (02) tragenden Stützelementen (05, 21, 22). Jede der Schienen (04) besteht aus wenigstens einer Profilleiste (06), welche mit ihrem Rücken (07) auf der Fläche (03) aufliegt. Die Profilleiste (06) weist wenigstens eine erste Rasterung (09) aus mehreren in Längsrichtung der Schiene (04) in einer Rasterweite zueinander beabstandet angeordneten Rasterausnehmungen (10) auf. An den Stützelementen (05, 21, 22) sind den Rasterausnehmungen (10) zugeordnete Rastermittel (11) vorgesehen. Die Rastermittel (11) der Stützelemente (05, 21, 22) und die Rasterausnehmungen (10) bilden zumindest einen Teil einer Verbindung zwischen Stützelement (05, 21, 22) und Schiene (04). Die Verbindung umfasst eine durch Anschlagen wenigstens eines ersten Rastermittels (12) an wenigstens eine diesem zugeordnete erste Rasterausnehmung (13) gebildete Scharnierachse (16, 26), um welche Schamierachse (16, 26) das Stützelement (05, 21, 22) unter formschlüssig ineinander greifender Zusammenführung wenigstens eines zweiten Rastermittels (14) und wenigstens einer diesem zugeordneten zweiten Rasterausnehmung (15) auf die Profilleiste (06) geklappt ist.

## Beschreibung

Die Erfindung betrifft eine Montagevorrichtung zur Anordnung von Solarmodulen gemäß dem Oberbegriff des Anspruchs 1.

Bei einem Solarmodul handelt es sich um mehrere, zu einer beispielsweise normierten Einheit gruppierte, gleichartige Solarkollektoren mit dem Zweck, durch ordnungsgemäße Installation eines Solarmoduls gleich mehrere Solarkollektoren fachgerecht anordnen und anschließen zu können. Bei den Solarkollektoren kann es sich zum Beispiel um solarthermische Kollektoren, wie Vakuumröhrenkollektoren oder Flachkollektoren, oder um solarelektrische Kollektoren, wie photovoltaische Zellen handeln. Solarmodule mit photovoltaischen Zellen werden beispielsweise auch als Photovoltaikmodule oder Sotarzeilenmodule bezeichnet, wohingegen Solarmodule mit solarthermischen Kollektoren auch als solarthermische Module bezeichnet werden. Bei der Anordnung mehrerer Solarmodule auf der Erdoberfläche ist die Einhaltung eines von der geographischen Breite abhängigen Winkels gegenüber der Erdachse sicherzustellen, damit die Solarmodule die Sonneneinstrahlung über den Verlauf eines Jahres hinweg größtmöglich nutzen können. Mit zunehmender geographischer Breite ist darüber hinaus ein zunehmender Abstand zwischen den Solarmodulen in horizontaler Richtung einzuhalten, damit es zu keiner Einschränkung der Nutzung der Sonneneinstrahlung durch eine gegenseitige Abschattung der Solarmodule untereinander kommt.

Zur Anordnung mehrerer Solarmodule auf einer im Wesentlichen ebenen, beispielsweise geneigten oder horizontalen festen Fläche, wie zum Beispiel einer Eindachung eines Gebäudes, sind Montagevonichtungen bekannt, welche in Abhängigkeit von der Neigung der Fläche gegenüber der Horizontalen und der geografischen Breite eine Befestigung der Solarmodule unter einem optimalen Winkel zur Erdachse und unter einem optimalen Abstand zueinander ermöglichen.

Durch EP 2 182 303 A2 ist eine Montagevorrichtung zur Anordnung von Solarmodulen auf einer Fläche bekannt. Die Montagevorrichtung besteht aus mehreren parallel zueinander verlaufend angeordneten geraden Schienen sowie an den Schienen befestigten Stützelementen. Die Solarmodule sind mittels Befestigungselementen an den Stützelementen befestigt. Die Schienen bestehen aus Profilleisten mit einem U-förmigen Querschnitt. Der horizontale Abschnitt des U-förmigen Querschnitts liegt dabei auf der Fläche auf, wohingegen die vertikalen Abschnitte auf der Fläche aufstehen. Im Querschnitt betrachtet weisen die vertikalen Abschnitte darüber hinaus auf den einander zugewandten Seiten jeweils eine in einer Richtung normal zu dem auf der Fläche aufliegenden horizontalen Abschnitt wirksame Hintergreifung auf. Diese Hintergreifung ist Teil einer normal zu der Fläche wirksamen Rastverbindung zwischen den Stützelementen und den Schienen.

Eine auch als Schnapp- oder Klipsverbindung bezeichnete Rastverbindung umfasst korrespondierende Rastelemente, von denen wenigstens eines elastisch verformbar ist und bei der Herstellung der Rastverbindung im Anschluss an eine Verformung mit mindestens einem anderen lösbar oder unlösbar verhakt Beispiele für derart korrespondierende Rastelemente sind eine Hintergreifung und ein in diese eingreifendes elastisch verformbares Rastmittel. Die Hintergreifung kann beispielsweise durch eine Nut oder einen Absatz mit einem Rücksprung gebildet sein, wohingegen das elastisch verformbare Rastmittel aus einer Rastfeder mit einer am freien Ende der Rastfeder angeordneten Rastnase bestehen kann. Diese Rastnase reicht bei hergestellter Rastverbindung in die Hintergreifung. Dank der Rastfeder kann die Rastnase während der Herstellung der Rastverbindung elastisch zurückfedern und bei Passieren der Hintergreifung in diese einfedern und dadurch verrasten.

Jedes der Stützelemente weist mindestens ein zur Verbindung mit einer Schiene vorgesehenes, der Hintergreifung zugeordnetes elastisch verformbares Rastmittel auf. Das Verrasten des mindestens einen elastisch verformbaren Rastmittels eines Stützelements mit der Hintergreifung verhindert, dass das Stützelement normal zur Fläche von einer Schiene gelöst werden kann.

Nachteile der Montagevorrichtung ergeben sich unter anderem durch die komplizierte und kostspielige Herstellung sowie die zeitaufwändige Montage. Die komplizierte und kostspielige Herstellung ist beispielsweise durch die an jedem Stützelement benötigten elastisch verformbaren, mit der Hintergreifung korrespondierenden Rastmittel bedingt, welche in der Lage sein müssen, dauerhaft sämtlichen auftretenden Kräften und Naturgewalten zu widerstehen. Die komplizierte und zeitaufwändige Montage ist beispielsweise durch das einzelne Ausmessen der längs der Schienen zwischen den Stützelementen erforderlichen Abstände bedingt.

Weitere Nachteile ergeben sich unter anderem dadurch, dass die normal zur Fläche wirksamen Rastverbindungen nicht geeignet sind, ein Verschieben der Solarmodule längs der Schienen, zum Beispiel bedingt durch Winddruck, zuverlässig zu verhindern. Um eine solche Verschiebung wirkungsvoll zu verhindern, müssen kostspielige Nachbesserungen der Montagevorrichtung unter Festlegung der Stützelemente durchgeführt werden.

Es ist Aufgabe der Erfindung, eine Montagevorrichtung zu entwickeln, welche eine einfache und kostengünstige Anordnung von Solarmodulen auf einer Fläche ermöglicht und die kostengünstig hergestellt werden kann.

Die gestellte Aufgabe wird durch die Merkmale des Anspruchs 1 gelöst.

Demnach ist eine Montagevorrichtung zur Anordnung von Solarmodulen auf einer Fläche mit mehreren parallel zueinander verlaufend angeordneten, geraden Schienen sowie an den Schienen befestigten Stützelementen vorgesehen. Die Solarmodule sind an den Stützelementen befestigt. Jede der Schienen besteht aus wenigstens einer Profilleiste, welche mit ihrem Rücken auf der Fläche aufliegt. Die Schienen können deshalb auch als Bodenschienen bezeichnet werden.

Die Profilleiste kann einen beispielsweise im Wesentlichen U-förmigen Querschnitt aufweisen, wobei dabei der horizontale Abschnitt des U-förmigen Querschnitts den Rücken bildet und auf der Fläche aufliegt, wohingegen die vertikalen Abschnitte auf der Fläche aufstehen.

Die Profilleiste weist wenigstens eine erste Rasterung für die Stützelemente auf. Darüber hinaus kann die Profilleiste wenigstens eine zweite Rasterung zur Verbindung zweier Profilleisten zur Verlängerung einer Schiene aufweisen. Die erste Rasterung kann deshalb auch als Stützelementerasterung und die zweite Rasterung als Schienenrasterung bezeichnet werden.

Sowohl die erste, als auch die gegebenenfalls vorgesehene zweite Rasterung können beispielsweise durch schlitzförmige und/oder ovale und/oder kreisförmige Rasterausnehmungen gebildet sein, welche in Längsrichtung der Schiene in einem regelmäßigen Abstand zueinander angeordnet sind. Die Rasterausnehmungen können auch in Form von Sacklöchern und/oder Öffnungen ausgebildet sein.

Die Stützelemente weisen wenigstens den Rasterausnehmungen der ersten und/oder der gegebenenfalls vorhandenen zweiten Rasterung zugeordnete Rastermittel auf, welche formschlüssig mit den Rasterausnehmungen der ersten und/oder der gegebenenfalls vorhandenen zweiten Rasterung korrespondieren. Die Rastermittel der Stützelemente und die Rasterausnehmungen zumindest der ersten Rasterung bilden einen Teil einer Verbindung zwischen Stützelement und Schiene.

Die Rastermittel können beispielsweise Laschen und/oder Zapfen und/oder Vorsprünge sowie gegebenenfalls Rücksprünge umfassen, deren Querschnittsabmessungen das Einführen je eines Rastermittels in wenigstens eine Rasterausnehmung erlauben.

Ebenso ist denkbar, die Rasterausnehmungen und die Rastermittel vertauscht auszuführen, wobei die Rastermittel an den Profilleisten der Schienen und die Rasterausnehmungen an den Stützelementen vorgesehen sind. Auch eine gemischte Ausgestaltung ist denkbar, wobei abwechselnd Rasterausnehmungen und Rastermittel an den Profilleisten der Schienen und an den Stützelementen vorgesehen sind. Allgemein ausgedrückt sind demnach an den Stützelementen und an den Profilleisten korrespondierende Rasterelemente angeordnet, welche als Rasterausnehmungen und als Rastermittel ausgeführt sein können.

Die Verbindung der Stützelemente mit den Schienen sieht vor, ein Stützelement zunächst mit wenigstens einem ersten Rastermittel in zumindest eine diesem zugeordnete erste Rasterausnehmung einer Profilleiste einer Schiene einzusetzen. Das wenigstens eine erste Rastermittel und die wenigstens eine diesem zugeordnete erste Rasterausnehmung bilden dabei einen scharnierartigen Ansatz mit einer Scharnierachse. Die Scharnierachse wird durch Anschlagen des wenigstens einen ersten Rastermittels an bzw. in die wenigstens eine diesem zugeordnete erste Rasterausnehmung gebildet. Im Anschluss wird das Stützelement um die Schamierachse auf die Profilleiste der Schiene geklappt. In aufeinander geklapptem Zustand befinden sich wenigstens ein zweites Rastermittel und wenigstens eine diesem zugeordnete zweite Rasterausnehmung gegenüberliegend in gegenseitigem formschlüssigem Eingriff.

Der durch zumindest eine Anlagefläche gebildete Anschlag zwischen dem wenigstens einen ersten Rastermittel und der wenigstens einen diesem zugeordneten ersten Rasterausnehmung bildet vereinfacht betrachtet ein Scharnier. Um die Scharnierachse dieses Scharniers wird das Stützelement unter gleichzeitiger Zusammenführung des wenigstens einen zweiten Rastermittels und der wenigstens einen diesem zugeordneten zweiten Rasterausnehmung aufeinander geklappt.

Das erste Rastermittel und die erste Rasterausnehmung können dabei eine gemeinsame Anlagefläche aufweisen, in welcher die Schamierachse verläuft. Dadurch kann bereits während des Aufeinanderklappens eine präzise Ausrichtung von Stützelement und Profilleiste bzw. Schiene relativ zueinander sichergestellt werden.

Die Schamierachse kann längs oder quer zur Schiene verlaufen.

Zur Sicherung eines mit einer Profilleiste einer Schiene verbundenen Stützelements gegen ein Lösen der Verbindung durch unbeabsichtigtes Zurückklappen um die

Schamierachse kann eine lösbare oder unlösbare Sicherungsverbindung vorgesehen sein. Beispielsweise können das zumindest ein zweites Rastermittel sowie die mindestens eine diesem zugeordnete Rasterausnehmung durch eine Sicherungsverbindung gegen unbeabsichtigtes Zurückklappen gesichert sein. Die Sicherungsverbindung kann beispielsweise eine Rastverbindung umfassen. Die Rastverbindung kann beim Aufeinanderklappen von Stützelement und Schiene bzw. Profilleiste um die Schamierachse hergestellt werden. Die Rastelemente der Rastverbindung können zumindest zum Teil durch die zweiten Rastermittel und/oder Rasterausnehmungen der ersten und/oder der gegebenenfalls vorhandenen zweiten Rasterung gebildet sein.

Beispielsweise kann in einem U-förmigen Querschnitt einer Profilleiste betrachtet zumindest ein vertikaler Abschnitt eine in einer Richtung normal zu dem auf der Fläche aufliegenden horizontalen Abschnitt wirksame Hintergreifung bilden. Diese Hintergreifung ist Teil einer als Sicherungsverbindung vorgesehenen, normal zu der Fläche wirksamen Rastverbindung zwischen den Stützelementen und den Schienen.

Alternativ oder zusätzlich kann die Sicherungsverbindung eine Schraub- und/oder Niet- und/oder Schweiß- und/oder Klebeverbindung umfassen. Bei einer Schraub- und/oder Nietverbindung kann beispielsweise vorgesehen sein, eine Rasterausnehmung zum Einbringen einer Schraube und/oder eines Niets zu verwenden.

Zur Sicherung gegen unbeabsichtigtes Lösen der Verbindung zwischen Stützelement und Profilleiste einer Schiene kann alternativ oder zusätzlich ein Niederhalter vorgesehen sein, welcher auf seiner einen Seite mit wenigstens einem Stützelement und auf seiner anderen Seite mit wenigstens einer Schiene verbunden ist. Der Niederhalter kann als so genanntes Windblech plattenartig ausgestaltet sein. Dadurch kann der Niederhalter gemeinsam mit einem Solarmodul von der Fläche aus betrachtet eine auf der Fläche aufstehende, konvergente Düse bilden, durch deren Düsenspalt unter den Solarmodulen gestaute warme Luft durch Konvektion austreten und kältere Luft aus der Umgebung unter die Solarmodule gefördert werden kann. Hierdurch wird die Kühlung der Solarmodule verbessert. Darüber hinaus verhindert ein solcher plattenartiger Niederhalter das Anheben der Solarmodule durch Wind.

Das Stützelement besteht aus Fuß, Hals und Kopf. Der Fuß ist mit den zur Befestigung an der Schiene erforderlichen Rastermitteln ausgestattet. Der Hals weist eine von der Modulgröße und der Neigung der Fläche gegenüber der Horizontalen abhängige Länge auf. Der Kopf schließlich ist mit Mitteln zur Verbindung mit den Solarmodulen ausgestattet.

Das Stützelement kann ein- oder beispielsweise modulartig mehrteilig ausgeführt sein. Bei einem modularüg aufgebauten mehrteiligen Stützelement können für den Hals mehrere gleichartige Elemente mit unterschiedlichen Längen für unterschiedliche Neigungen der Fläche gegenüber der Horizontalen vorgesehen sein. Der Fuß kann beispielsweise als Klemmlasche ausgeführt sein. Kopf und Hals können dabei ein Element bilden, welches mit einem Fuß zu einem Stützelement verbunden werden kann.

Zur Verlängerung einer Schiene durch Ansetzen einer Profilleiste oder eines Profilleistenabschnitts an eine oder mehrere Profilleisten kann ein Profilleistenverbinder vorgesehen sein. Eine Profilleiste wird hierbei zur Verlängerung einer Schiene mittels eines Profilleistenverbinders an ein Kopfende der Schiene angesetzt. Der Profilleistenverbinder kann zur Verbindung mit einer oder mehreren Profilleisten den Rasterausnehmungen der ersten, als Stützelementerasterung bezeichneten Rasterung und/oder der gegebenenfalls vorhandenen zweiten, als Schienenrasterung bezeichneten Rasterung zugeordnete Rastermittel aufweisen. Die Rastermittel des Profilleistenverbinders und die Rasterausnehmungen der ersten und/oder der zweiten Rasterung bilden zumindest einen Teil einer Verbindung zwischen Profilleistenverbinder und Schiene.

Zumindest eines der Rastermittel des Profilleistenverbinders kann mit mindestens einer Rasterausnehmung einer Profilleiste einen scharnierartigen Ansatz mit einer Scharnierachse bilden. Die Herstellung einer Verbindung zwischen Profilleistenverbinder und wenigstens einer Profilleiste kann auf dieselbe Art und Weise erfolgen wie die Herstellung der Verbindung zwischen Stützelement und Schiene bzw. Profilleiste.

Auch hierbei können die Rasterausnehmungen und die Rastermittel vertauscht ausgeführt sein, wobei die Rastermittel an den Profilleisten der Schienen und die Rasterausnehmungen an den Profilleistenverbindem vorgesehen sind. Auch eine gemischte Ausgestaltung ist denkbar, wobei beispielsweise abwechselnd Rasterausnehmungen und Rastermittel an den Profilleisten der Schienen und an den Profilleistenverbindem vorgesehen sind. Allgemein ausgedrückt können demnach an den Profilleistenverbindem und an den Profilleisten korrespondierende Rasterelemente angeordnet sein, welche beispielsweise als Rasterausnehmungen und als Rastermittel ausgeführt sein können.

Der Verbindung zwischen Stützlementen und Profilleiste und der Verbindung zwischen Profilleistenverbinder und Profilleiste können unterschiedliche, eingangs erwähnte Rasterungen zugeordnet sein. Eine Verbindung zwischen Stützelement und Profilleiste kann dabei zusätzlich eine oder mehrere Rasterausnehmungen der Schienenrasterung nutzen. Alternativ oder zusätzlich kann eine Verbindung zwischen Profilleistenverbinder und Profilleiste zusätzlich eine oder mehrere Rasterausnehmungen der Stützelementerasterung nutzen.

Die erste, auch als Stützelementerasterung bezeichnete Rasterung kann an den einander zugewandten Seiten der vertikalen Abschnitte des U-förmigen Querschnitts einer Profilleiste vorgesehene Rasterausnehmungen umfassen. Die zweite, auch als Schienenrasterung bezeichnete Rasterung kann an den freien, dem horizontalen Abschnitt abgewandten Enden der vertikalen Abschnitte des U-förmigen Querschnitts einer Profilleiste vorgesehene Rasterausnehmungen umfassen. Zusätzliche Rasterausnehmungen können an dem auf der Fläche aufliegenden horizontalen Abschnitt der Profilleiste vorgesehen sein. Die Rasterausnehmungen einer Rasterung können auch von der anderen Rasterung mit genutzt werden.

Die Stützelemente können vordere niedere Stützelemente und hintere hohe Stützelemente umfassen. Der Höhenunterschied zwischen vorderem und hinterem Stützelement entspricht vorzugsweise der optimalen Ausrichtung eines Solarmoduls bei gegebenen Abmessungen des Solarmoduls, bei gegebener Neigung der Fläche und bei einer bestimmten geographischen Breite.

Die durch die Abstände zwischen den Rasterausnehmungen entlang der Schiene gegebene Rasterweite der Rasterung kann nach wirtschaftlichen Gesichtspunkten beliebig gewählt sein. Vorzugsweise orientiert sich die Rasterweite an einem Unterschiedsmaß, welches sich zwischen den zur Vermeidung von Abschattungen zwischen den Solarmodulen ergebenden Abständen für unterschiedliche Dachneigungen ergibt.

Die Montagevorrichtung kann darüber hinaus eine seitliche Abschlussverkleidung aufweisen, welche unter anderem die Witterungsbeständigkeit insbesondere im Hinblick auf eine Wind- und Böenbeständigkeit der Montagevorrichtung mit darauf angeordneten Solarmodulen verbessert.

Vorteile der Erfindung gegenüber dem Stand der Technik ergeben sich unter anderem durch:
- ein allzeitig einfaches Lösen der Stützelemente durch Zurückklappen,
- eine einfache und kostengünstige Montage der Stützelemente durch leichtes Einrasten an jeder beliebigen Rasterausnehmung der Schiene in der Rasterweite entsprechenden Schrittweiten,
- ein maßhaltiges Rasten im richtigen, durch ein ganzzahliges Vielfaches der Rasterweite gegebenen Abstand der Solarmodule zueinander,
- ein Entfallen des zeitaufwändigen und kostspieligen Einmessens der Abstände mittels Maßwerkzeug während der Montage,
- eine wirkungsvolle Vermeidung eines Verschiebens der Stützelemente durch Winddruck längs der Schienen, da die Rasterausnehmungen gemeinsam mit den Rastermitteln formschlüssig ineinander greifende Einrastpunkte bilden,
- Windbleche ringsum mit Düsenspalt zur Unterdruckerzeugung und Wärmeableitung,
- eine durch den baukastenartigen Aufbau einfache, zeitsparende und ohne besondere Vorkenntnisse durchführbare Montage und
- eine einfache Verlängerung der Schienen durch Aneinandersetzen und einfaches Verbinden mehrerer Profilleisten.

Die Erfindung wird nachfolgend anhand von in den Zeichnungen dargestellten Ausführungsbeispielen näher erläutert. Darin bezeichnen gleiche Bezugszeichen gleiche oder gleich wirkende Elemente. Es zeigen in schematischer Darstellung:
- Fig. 1: eine mehrere Solarmodule tragende Montagevorrichtung in perspektivischer Vorderansicht,
- Fig. 2: eine Montagevorrichtung in noch nicht fertig gestelltem Zustand in perspektivischer Vorderansicht,
- Fig. 3: eine Detailansicht der Montagevorrichtung aus Fig. 2 in einer perspektivischen Vorderansicht,
- Fig. 4: eine Detailansicht der Montagevorrichtung aus Fig. 2 in einer perspektivischen Rückansicht,
- Fig. 5: eine vergrößerte Detailansicht der Montagevorrichtung aus Fig. 4 in einer perspektivischen Rückansicht und
- Fig. 6: eine Detailansicht einer Verbindung zwischen zwei Profilleisten einer Montagevorrichtung in perspektivischer Ansicht.

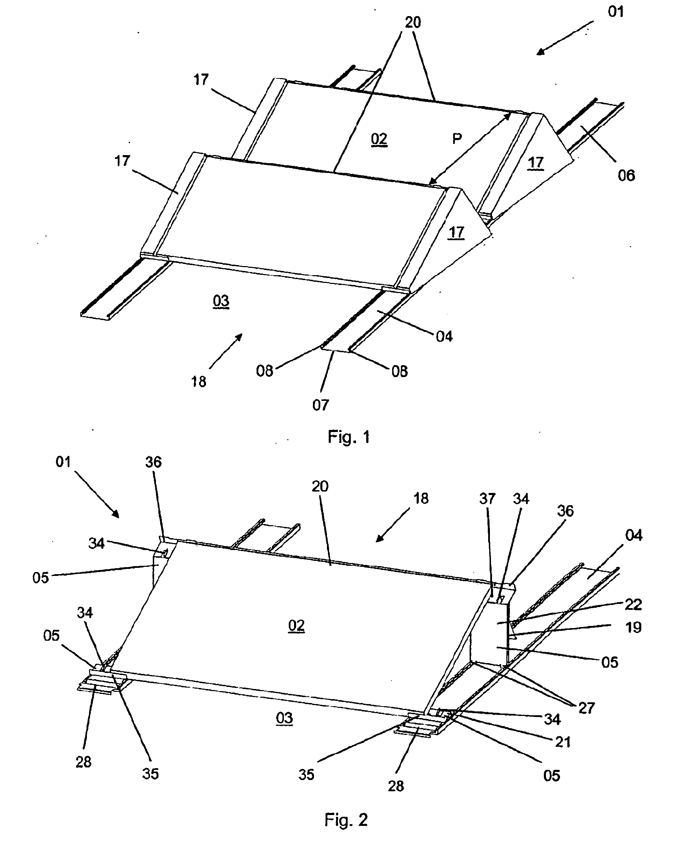

Eine in den Fig. 1 bis 6 ganz oder in Teilen dargestellte Montagevorrichtung 01 zur Anordnung von Solarmodulen 02 auf einer Fläche 03 besteht im Wesentlichen aus mehreren parallel zueinander verlaufend angeordneten, geraden Schienen 04 sowie an den Schienen 04 befestigten, die Solarmodule 02 tragenden Stützelementen 05. Jede der Schienen 04 besteht aus wenigstens einer Profilleiste 06, welche mit ihrem Rücken auf der Fläche 03 aufliegt.

Die Profilleisten 06 können einen beispielsweise im Wesentlichen U-förmigen Querschnitt aufweisen. Dabei bildet der horizontale Abschnitt 07 des U-förmigen Querschnitts den Rücken, der auf der Fläche 03 aufliegt. Die vertikalen Abschnitte 08 des U-förmigen Querschnitts stehen auf der Fläche 03 auf.

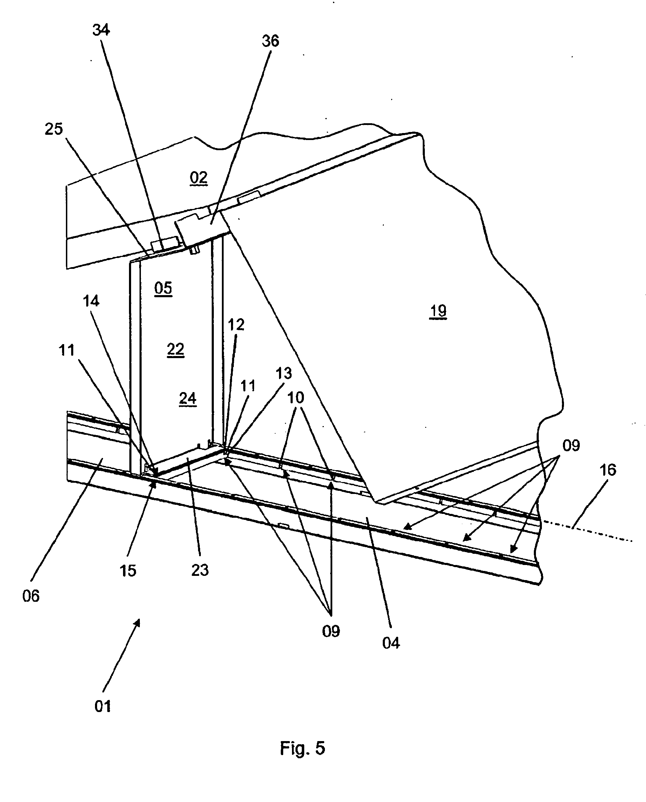

Jede Profilleiste 06 weist wenigstens eine erste Rasterung 09 aus mehreren in Längsrichtung der Schiene 04 in einer Rasterweite zueinander beabstandet angeordneten Rasterausnehmungen 10 auf (Fig. 5).

Die Rasterweite der Rasterung 09 ist durch die Abstände zwischen den Rasterausnehmungen 10 entlang der Schiene 04 gegeben. Die Rasterweite kann nach wirtschaftlichen Gesichtspunkten beliebig gewählt sein. Beispielsweise kann sich die Rasterweite an einem Unterschiedsmaß orientieren, welches sich zwischen den zur Vermeidung von Abschattungen zwischen den Solarmodulen 02 ergebenden, in Fig. 1 durch den Doppelpfeil P angedeuteten Abständen für unterschiedliche Dachneigungen ergibt. Zur Bestimmung des die Rasterweite bestimmenden Unterschiedsmaßes können beispielsweise in 5°-Schritten variierte Dachneigungen Berücksichtigung finden.

An den Stützelementen 05 sind den Rasterausnehmungen 10 zugeordnete Rastermittel 11 vorgesehen. Die Rastermittel 11 der Stützelemente 05 und die Rasterausnehmungen 10 bilden zumindest einen Teil einer Verbindung zwischen Stützelement 05 und Schiene 04. Die Verbindung umfasst eine durch Anschlagen wenigstens eines ersten Rastermittels 12 an wenigstens eine diesem zugeordnete erste Rasterausnehmung 13 gebildete Schamierachse 16. Um diese Scharnierachse 16 ist das Stützelement 05 unter formschlüssig ineinander greifender Zusammenführung wenigstens eines zweiten Rastermittels 14 und wenigstens einer diesem Rastermittel 14 zugeordneten zweiten Rasterausnehmung 15 auf die Profilleiste 06 geklappt (Fig. 5).

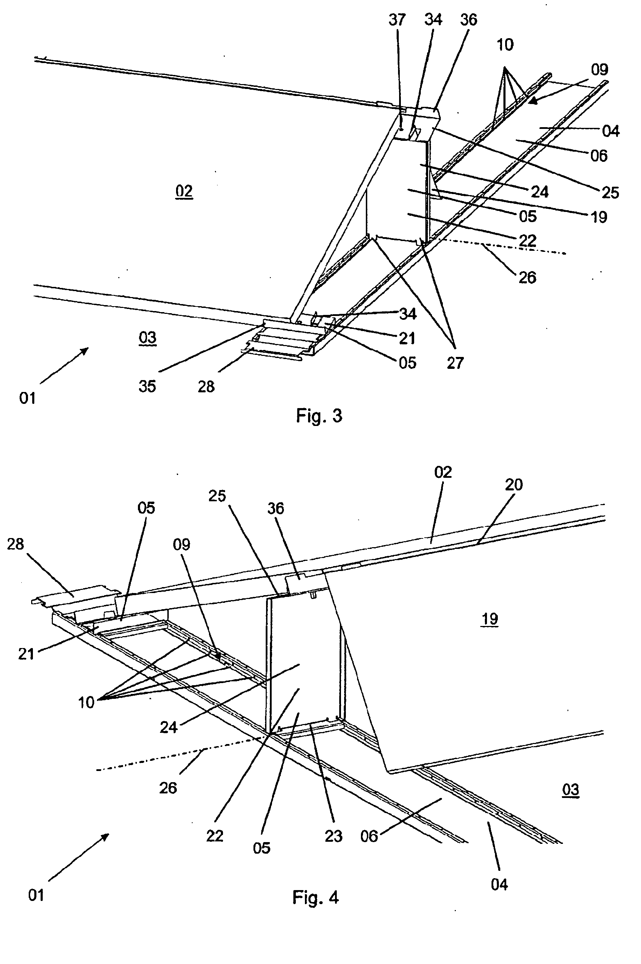

Die Scharnierachse 16 kann dabei, wie in Fig. 5 angedeutet, längs bzw. parallel zu der Schiene 04 verlaufen. Die Schamierachse 26 kann aber auch quer zu der Schiene 04 verlaufend ausgeführt sein, wie in den Fig. 3 und 4 angedeutet.

Die Montagevorrichtung 01 in den Fig. 1 und 2 weist eine Bahn 18 auf. Es können mehrere Bahnen 18 nebeneinander vorgesehen sein. Benachbarte Bahnen 18 nutzen hierbei die zwischen den Bahnen 18 befindlichen Schienen 04 mit den darauf angeordneten Stützelementen 05 gemeinsam, wie in Fig. 2 ersichtlich.

Die Montagevorrichtung kann, wie in Fig. 1 dargestellt, seitliche Abschlussverkleidungen 17 umfassen. Diese verhindern, dass die Unterseiten der Solarmodule 02 eine Angriffsfläche für Windböen bilden, wodurch es zu einer Beschädigung der Montagevorrichtung 01 sowie der darauf angeordneten Solarmodule kommen kann. Die Abschlussverkleidungen 17 bilden vorzugsweise ein den verbleibenden, nicht zur Anordnung von Solarmodulen 02 in einer benachbarten Bahn 18 genutzten Teil der Stützelemente 05 (Fig. 2) umschließendes Gehäuse.

Die Montagevorrichtung 01 kann darüber hinaus Niederhalter 19 umfassen (Fig. 4 und 5). Die Niederhalter 19 können als eine Sicherungsverbindung zwischen Stützelement 05 und Profilleiste 06 dienen. Die Sicherungsverbindung verhindert ein Zurückklappen des Stützelements 05 von der Profilleiste 06 um die Schamierachse 16 unter Lösung der formschlüssig ineinander greifenden Zusammenführung.

Die Niederhalter 19 können plattenartig als Windblech ausgeführt sein, wodurch einerseits zusätzlich ein Anheben der Solarmodule 02 durch einen unter diese fahrenden Wind verhindert wird. Zum anderen bilden die als Windblech ausgeführten Niederhalter 19 eine Düse, durch deren Düsenöffnung 20 unter den Solarmodulen 02 gestaute warme Luft austreten kann. Tritt die warme Luft durch die Düsenöffnung 20 der Düse aus, saugt sie gleichzeitig kältere Luft aus der Umgebung an, wodurch der Wärmehaushalt der Solarmodule verbessert wird.

Die Stützelemente 05 umfassen vordere niedere Stützelemente 21 und hintere hohe Stützelemente 22. Der Höhenunterschied zwischen den vorderen Stützelementen 21 und den hinteren Stützelementen 22 entspricht vorzugsweise der optimalen Ausrichtung eines Solarmoduls 02 bei gegebenen Abmessungen des Solarmoduls 02, bei gegebener Neigung der Fläche 03 und bei einer bestimmten geographischen Breite.

Die Stützelemente 05 weisen einen Fuß 23, einen Hals 24 und einen Kopf 25 auf.

Der Fuß 23 ist mit den zur Befestigung an der Schiene 04 erforderlichen Rastermitteln 11 ausgestattet. Zusätzlich kann ein Verdrehschutz 27, beispielsweise in Form von Laschen vorgesehen sein, der bei quer zu den Schienen 04 verlaufender Scharnierachse 26 ein Verkippen der Stützelemente 05 über einen vorgegebenen Winkel zur Profilleiste 06 hinweg verhindert.

Der Hals 24 weist eine von der Modulgröße und der Neigung der Fläche 03 gegenüber der Horizontalen abhängige Länge auf.

Der Kopf 25 schließlich ist mit Mitteln zur Verbindung mit den Solarmodulen 02 ausgestattet.

An dem Kopf 25 können die Solarmodule 02 beispielsweise durch Einhängen und gegebenenfalls anschließendes Verschrauben befestigt sein. Zum Einhängen können beispielsweise Laschen 34 vorgesehen sein, welche ein Verschieben der Solarmodule quer zu den Scheinen 04 verhindern. Darüber hinaus können Laschen 35 vorgesehen sein, welche ein Abrutschen der Solarmodule 02 verhindern. Weitere Laschen 36 können der Verbindung mit dem Niederhalter 19 dienen. In den Stützelementen 05 können darüber hinaus Befestigungsmuttern 37 integriert sein, welche der Verschraubung von Solarmodulen dienen können (Fig. 2 und Fig. 3). Die Integration solcher Befestigungsmuttem 37 in die Stützelemente 05 verhindert ein Verlieren von Befestigungsteilen, benötigt weniger Zusatzbauteile und ist dadurch kostengünstig.

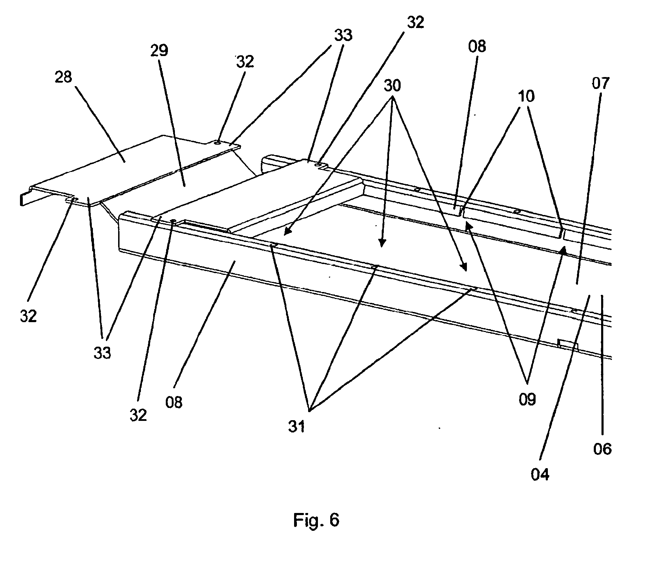

Zur Verlängerung der Schienen 04 durch Ansetzen einer weiteren Profilleiste an ein Kopfende einer durch eine oder mehrere Profilleisten 06 gebildeten Schiene 11 kann ein in Fig. 6 dargestellter Profilleistenverbinder 28 vorgesehen sein.

Der Profilleistenverbinder 28 weist einen V-förmigen Abschnitt 29 auf, der als Verdrehsicherung dient. Der Abschnitt 29 verhindert sowohl ein Verkanten in der Profilleiste 06, als auch ein Abknicken zwischen zwei kopfseitig miteinander verbundenen Profilleisten 06. Zum kopfseitigen Verbinden zweier Profilleisten 06 wird der Profilleistenverbinder 28 vom Kopfende her in die miteinander zu verbindenden Profilleisten 06 eingeschoben. Das Einschieben des Profilleisten-verbinders 28 in die Profilleiste 06 erfolgt hierbei unter Formschluss in den verbleibenden Richtungen quer zur Schiene 04. Der Profilleistenverbinder 28 wird hierbei so weit eingeschoben, bis die Mitte des Abschnitts 29 in etwa am Verbindungsstoß zwischen den Profilleisten 06 zu liegen kommt.

An der Profilleiste 06 kann eine zweite Rasterung 30 vorgesehen sein, welche in gleichmäßigem Abstand längs der Profilleiste 06 bzw. der Schiene 04 angeordnete Rasterausnehmungen 31 umfasst. Die Anordnung der Rasterausnehmungen 31 ist dabei auf den Profilleistenverbinder 28 abgestimmt. Die Abstimmung ist derart vorgenommen, dass Nietöffnungen 32 an eigens hierfür am Profilleistenverbinder 28 vorgesehenen Nietlaschen 33 bei ordnungs-gemäß in die miteinander zu verbindenden Profilleisten 06 eingeschobenem Profilleistenverbinder 28 mit den Rasterausnehmungen 31 zur Deckung kommen. Durch Einsetzen von Nieten, Bolzen oder Schrauben in die zur Deckung gebrachten Nietöffnungen 32 und Rasterausnehmungen 31 werden die Profil-leisten 06 anschließend miteinander fest verbunden.

Der Verbindung des Profilleistenverbinders 28 mit der Profilleiste 06 kann zumindest zum Teil dieselbe Rasterung 09 zugeordnet sein, wie der Verbindung der Stützelemente 05 mit der Profilleiste 06.

Wichtig ist hervorzuheben, dass die Rasterausnehmungen 10 und die Rastermittel 11 auch vertauscht oder gemischt ausgeführt sein können. Bei der vertauschten Ausführung sind die Rastermittel 11 an den Profilleisten 06 der Schienen 04 und die Rasterausnehmungen 10 an den Stützelementen 05 vorgesehen. Bei der gemischten Ausführung sind beispielsweise abwechselnd Rasterausnehmungen 10 und Rastermittel 11 an den Profilleisten 06 der Schienen 04 und an den Stützelementen 05 vorgesehen.

Die Erfindung ist insbesondere im Bereich der Herstellung von Montagevorrichtungen zur Anordnung von Solarmodulen sowie der Montage von Solarmodulen beispielsweise auf Gebäuden gewerblich anwendbar.

### Bezugszelchenlste

- 01: Montagevorrichtung
- 02: Solarmodul
- 03: Fläche
- 04: Schiene
- 05: Stützelement
- 06: Profilleiste
- 07: horizontaler Abschnitt
- 08: vertikaler Abschnitt
- 09: erste Rasterung
- 10: Rasterausnehmung
- 11: Rastermittel
- 12: erstes Rastermittel
- 13: erste Rasterausnehmung
- 14: zweites Rastermittel
- 15: zweite Rasterausnehmung
- 16: Schamierachse
- 17: Abschlussverkleidung
- 18: Bahn
- 19: Niederhalter
- 20: Düsenöffnung
- 21: vorderes Stützelement
- 22: hinteres Stützelement
- 23: Fuß
- 24: Hals
- 25: Kopf
- 26: Scharnierachse
- 27: Verdrehschutz
- 28: Profilleistenverbinder
- 29: Abschnitt
- 30: Rasterung
- 31: Rasterausnehmung
- 32: Nietöffnung
- 33: Nietlasche
- 34: Lasche
- 35: Lasche
- 36: Lasche
- 37: Befestigungsmutter

- P: Abstand

## Patentansprüche

1. Montagevorrichtung (01) zur Anordnung von Solarmodulen (02) auf einer Fläche (03) mit parallel zueinander angeordneten Schienen (04) sowie an den Schienen (04) befestigten, die Solarmodule (02) tragenden Stützelementen (05, 21, 22), wobei die Schienen (04) aus Profilleisten (06) bestehen, welche mit ihrem Rücken (07) auf der Fläche (03) aufliegen,
**dadurch gekennzeichnet,**
**dass** die Profilleisten (06) wenigstens eine erste Rasterung (09) aus mehreren in Längsrichtung der Schiene (04) in einer Rasterweite zueinander beabstandet angeordneten Rasterausnehmungen (10) aufweisen und
**dass** an den Stützelementen (05, 21, 22) den Rasterausnehmungen (10) zugeordnete Rastermittel (11) vorgesehen sind, wobei die Rastermittel (11) der Stützelemente (05, 21, 22) und die Rasterausnehmungen (10) zumindest einen Teil einer Verbindung zwischen Stützelement (05, 21, 22) und Schiene (04) bilden, diese Verbindung eine durch Anschlagen wenigstens eines ersten Rastermittels (12) an wenigstens eine diesem zugeordnete erste Rasterausnehmung (13) gebildete Scharnierachse (16, 26) umfasst, um welche das Stützelement (05, 21, 22) unter formschlüssig ineinander greifender Zusammenführung wenigstens eines zweiten Rastermittels (14) und wenigstens einer diesem Rastermittel (14) zugeordneten zweiten Rasterausnehmung (15) auf die Profilleiste (06) geklappt ist.

2. Montagevorrichtung nach Anspruch 1,
**dadurch gekennzeichnet,**
**dass** die Scharnierachse (16, 26) längs oder quer zur Schiene (04) verläuft.

3. Montagevorrichtung nach Anspruch 1 oder 2,
**gekennzeichnet durch**
eine Sicherungsverbindung zwischen Stützelement (05, 21, 22) und Profilleiste (06), welche ein Zurückklappen des Stützelements (05) von der Profilleiste (06) unter Lösung der formschlüssig ineinander greifenden Zusammenführung verhindert.

4. Montagevorrichtung nach Anspruch 3,
**dadurch gekennzeichnet,**
**dass** die Sicherungsverbindung eine Rasterverbindung umfasst.

5. Montagevorrichtung nach Anspruch 3 oder 4,
**dadurch gekennzeichnet,**
**dass** die Sicherungsverbindung eine Schraubverbindung umfasst.

6. Montagevorrichtung nach Anspruch 3, 4 oder 5,
**dadurch gekennzeichnet,**
**dass** die Sicherungsverbindung eine Nietverbindung umfasst.

7. Montagevorrichtung nach einem der Ansprüche 3 bis 6,
**dadurch gekennzeichnet,**
**dass** die Sicherheitsverbindung einen mit wenigstens einem Stützelement (05, 21, 22) und mit wenigstens einer Profilleiste verbundenen Niederhalter (19) umfasst.

8. Montagevorrichtung nach Anspruch 7,
**dadurch gekennzeichnet,**
**dass** der Niederhalter (19) als ein plattenartiges Windblech ausgeführt ist.

9. Montagevorrichtung nach einem der vorhergehenden Ansprüche,
**dadurch gekennzeichnet,**
**dass** die Stützelemente (05, 21, 22) zumindest zur modulartigen Anpassung an unterschiedliche Neigungen der Fläche gegenüber der Horizontalen mehrteilig ausgeführt sind.

10. Montagevorrichtung nach einem der vorhergehenden Ansprüche,
**dadurch gekennzeichnet,**
**dass** die Stützelemente (05) vordere niedere Stützelemente (21) und hintere hohe Stützelemente (22) umfassen, wobei der Höhenunterschied zwischen vorderem und hinterem Stützelement (05, 21, 22) vorzugsweise einer optimalen Ausrichtung eines Solarmoduls (02) bei gegebenen Abmessungen des Solarmoduls (02), bei gegebener Neigung der Fläche (03) und bei einer bestimmten geographischen Breite entspricht.

11. Montagevorrichtung nach einem der vorhergehenden Ansprüche,
**dadurch gekennzeichnet,**
**dass** zur Verlängerung einer Schiene (04) eine Profilleiste (06) mittels eines Profilleistenverbinders (28) an ein Kopfende einer Schiene (04) angesetzt ist.

12. Montagevorrichtung nach Anspruch 11,
**dadurch gekennzeichnet,**
**dass** am Profilleistenverbinder (28) zur Verbindung mit wenigstens einer Profilleiste (06) mit den Rasterausnehmungen (31) einer an der Profilleiste (06) vorgesehenen Rasterung (30) korrespondierende Rastermittel (32) vorgesehen sind.

13. Montagevorrichtung nach Anspruch 12,
**dadurch gekennzeichnet,**
**dass** der Verbindung des Profilleistenverbinders (28) mit der Profilleiste (06) zumindest zum Teil eine andere Rasterung (30) zugeordnet ist als der Verbindung der Stützelemente (05, 21, 22) mit der Profilleiste (06).

14. Montagevorrichtung nach Anspruch 12,
**dadurch gekennzeichnet,**
**dass** der Verbindung des Profilleistenverbinders (28) mit der Profilleiste (06) zumindest zum Teil dieselbe Rasterung (09) zugeordnet ist, wie der Verbindung der Stützelemente (05, 21, 22) mit der Profilleiste (06).

15. Montagevorrichtung nach einem der vorhergehenden Ansprüche,
**gekennzeichnet durch**
eine seitliche Abschlussverkleidung (17).
